# EUROPEAN PATENT SPECIFICATION

(11) **EP 1 969 250 B1**
(45) Date of publication and mention of the grant of the patent: **26.06.2019**
(21) Application number: 06835686.4
(22) Date of filing: 27.12.2006
(51) Int. Cl.: F16G 5/16

(54) **DRIVE BELT AND TRANSVERSE ELEMENT FOR A DRIVE BELT**
ANTRIEBSRIEMEN UND QUERELEMENT FÜR EINEN ANTRIEBSRIEMEN
COURROIE D'ENTRAINEMENT ET ELEMENT TRANSVERSE POUR UNE COURROIE D'ENTRAINEMENT

(30) Priority: 30.12.2005 NL 1030811
(43) Date of publication of application: 17.09.2008
(73) Proprietor: ROBERT BOSCH GMBH, 70442 Stuttgart (DE)
(72) Inventor: TRAN, Minh Duc, 5348 GC Oss (NL)
(74) Representative: Plevier, Gabriël Anton Johan Maria
(86) International application number: PCT/NL2006/000670
(87) International publication number: WO 2007/078189

(56) References cited:
- EP-A- 1 221 563
- EP-A1- 1 067 311
- US-A1- 2001 051 554

## Description

The invention relates to a drive belt for use with a continuously variable transmission having two variable pulleys, each forming a V-groove, which drive belt is provided with a carrier consisting of two adjacent endless band sets, each set comprising a number of concentrically nested, relatively thin bands, in which transverse elements are arranged. Each transverse element is provided with two cutouts located opposite one another for accommodating the band sets, in such a manner that a first part of the transverse element extends below the band sets, a second part of the transverse element is situated between the band sets and a third part of the transverse element extends above the band sets. A drive belt of this type is known from EP-A-0014013.

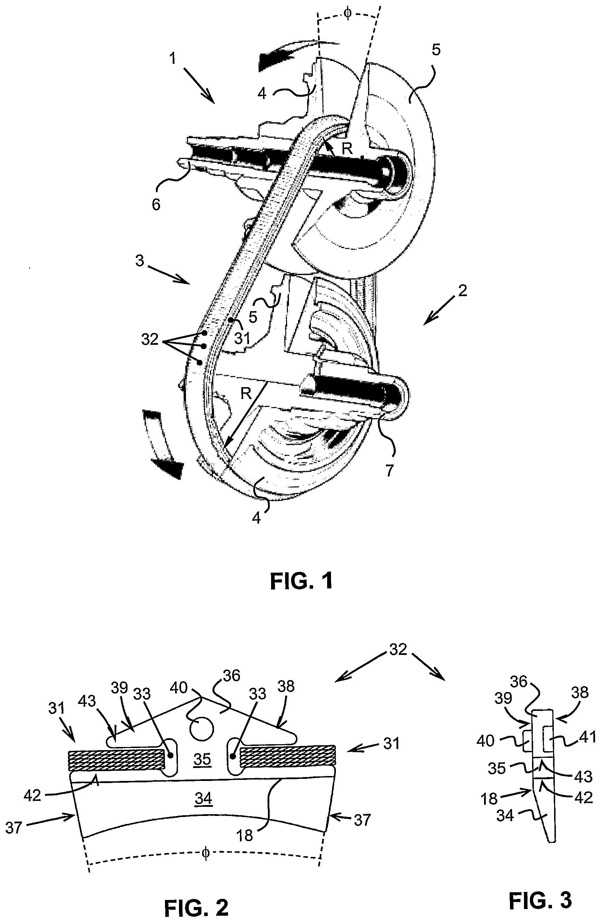

When describing the directions with respect to the transverse element, it is always assumed that the transverse element is in an upright position, as is illustrated in figure 2 in front view. In this figure, the longitudinal and/or movement direction of the drive belt is at right angles to the plane of the figure.

The shape of an inner surface of the cutouts has to meet certain requirements in order to ensure a good operation of the drive belt. In particular, this shape affects the good operation of the band sets, which are vulnerable components of the drive belt. They are subjected to a relatively large tensile load, during which a considerable variable bending load occurs, partly depending on the selected transmission ratio of the transmission. During operation of the drive belt in the transmission, the transverse elements are pushed radially outwards against the band sets, at least at the pulley, with said inner surface contacting the respective band set at least at the location of said first part of the transverse element. This part of the inner surface is referred to below as the saddle surface. It is known, for example from GB-A-2013116, to design the saddle surface as a doubly curved surface, that is to say both in the transverse direction and in the longitudinal direction of the drive belt.

In accordance with the prior art, the curve of the saddle surface in the longitudinal direction of the drive belt forms a circular arch with a single radius of curvature, which is also referred to as the short saddle radius. The short saddle radius is chosen such that it is smaller than the smallest running radius of the drive belt on the pulleys of the transmission. It is assumed that, as a result of this measure, the band sets are prevented from coming into contact with the relatively sharp transitions between the saddle surface and a front or rear surface, oriented in the longitudinal direction of the drive belt, of the transverse element. Otherwise, a significant contact stress could be introduced in a band set, resulting in particular in an increase in the fatigue load thereof which would be detrimental to the service life of the drive belt.

It is also known, for example from the United States patent publication US 2001/0051554 A1, to additionally design a top boundary surface of the cutouts as a curved surface in relation to the longitudinal direction of the drive belt. However, US 2001/0051554 A1 does neither pose any requirement on the radius of curvature of this latter surface, nor disclose any particular function thereof.

According to the invention, it was found in practice that the abovementioned measure was indeed able to increase the service life of the drive belt, but that the latter is still essentially determined by the eventual breakage of the band set. It is therefore an object of the present invention to further increase the service life of the drive belt, in particular by lowering the load on the band set, more particularly by further improving the design of the transverse element.

This object is achieved according to the invention by the measure from the characterizing clause of Claim 1. Such a drive belt prevents the outer band of the band set from coming into contact with the front and rear edge of the upper boundary surface of the cutouts, allowing for the free movement, in particular the free rotation, of the transverse elements with respect to the band sets. Said free movement is in this case brought about by the tolerance allowed for between the radial height of the band set and that of the cutout.

The invention is, inter alia, based on the fact that the positive effect of the measure disclosed in GB-A-2013116 on the service life of the drive belt as a whole did not meet expectations. This was due to the eventual breakage of the outer band of the band set, apparently as a result of a (frictional) contact with the third part of the transverse element which extends above the band sets or the upper boundary surface and in particular with the relatively sharp transitions thereof with the front and rear surface, oriented in the longitudinal direction of the drive belt, of the transverse element.

Incidentally, the minimum required curvature according to the invention of the upper boundary surface in the longitudinal direction of the drive belt is preferably provided in the shape of a circular arch with a single radius of curvature.

By applying the abovementioned measure, the fatigue service life of the outer band of the band set is increased and, if this new measure is applied in combination with the already known measure according to which the short saddle radius should be selected to be smaller than the smallest running radius of the drive belt, it is also possible to increase the operational service life of the band set and the drive belt as a whole.

In order to illustrate the invention, an exemplary embodiment of a drive belt will be described with reference to the drawing, in which:
Fig. 1 diagrammatically shows a side view of a drive belt;
Fig. 2 shows a cross section of the drive belt;
Fig. 3 shows a side view of a transverse element of the drive belt;
Fig. 4 diagrammatically shows a cross section of a transverse element and a band set of the drive belt in two different orientations with respect to one another;
Fig. 5 diagrammatically shows a cross section of a transverse element according to the invention and a band set in two different orientations with respect to one another; and
Fig. 6 diagrammatically shows a cross section of another transverse element according to the invention and a band set in two different orientations with respect to one another.

The diagrammatic illustration of Figure 1 shows a drive belt 3 which runs over two pulleys 1,2. In the illustrated position, the top pulley 1 rotates more quickly than the bottom pulley 2. By changing the distance between the two parts, in this case conical discs 4, 5 from which each pulley 1,2 is composed, the so-called running radius R of the drive belt 3 on the respective pulleys 1,2 can be changed, as a result of which the speed difference between the two pulleys 1,2 can be varied as desired. This is a known manner of varying a difference in rotational speed between two shafts.

In Figure 2, the drive belt 3 is shown in cross section. This figure shows a cross section of two band sets 31 and a front view of a transverse element 32, of which the drive belt 3 comprises a considerable number, arranged over the periphery of the band sets 31. Both the transverse elements 32 and the bands of the band sets 31 are made of metal. The transverse elements 32 are able to move freely in the longitudinal direction of the band sets 31, so that when a force is transmitted between the pulleys 1,2, this force is transmitted by the transverse elements 32 pressing against one another. The band sets 31 in this case guide the transverse elements 32.

In the exemplary embodiment illustrated here, a band set 31 consists of five bands, although in practice a band set 31 often comprises more bands, generally nine, ten or twelve.

Each transverse element 32, which is also shown in side view in Figure 3, is provided with two cutouts 33 located opposite one another, each for accommodating one of the two band sets 31, so that a first or web part 34 of the transverse element 32 extends below the band sets 31, a second or neck part 35 of the transverse element 32 is situated between the band sets 31 and a third or head part 36 of the transverse element 32 extends above the band sets 31. A respective cutout 33 is delimited at the bottom by a so-called saddle surface 42 of the web part 34 and at the top by a so-called top boundary surface 43 of the head part 36.

The lateral or pulley contact surfaces 37 of said web part 34 of the transverse element 32 are oriented at an angle φ with respect to one another, which corresponds at least substantially to a V-angle φ defined between the conical discs 4,5 of the pulleys 1,2 (see Fig. 1).

A rear side 38 of the transverse element 32 is substantially flat, while a so-called tilting line 18 is provided on a front side 39 of the transverse element 32. Above the tilting line 18, the transverse element 32 in side view has an essentially constant thickness and below the tilting line 18 said web part 34 tapers towards the bottom. The tilting line 18 is effectively formed by a slightly rounded strip on the front side 39 of the transverse element 32. In the drive belt 3, the front side 39 of the transverse element 32 comes into contact with the rear side 38 of an adjacent transverse element 32 at the location of the tilting line 18, both in the straight sections of the drive belt 3 between the pulleys 1,2 and in the curved sections thereof on the pulleys 1,2.

The transverse element 32 is also provided with a protuberance 40 on the front side 39 and a recess 41 on the rear side 38, the protuberance 40 and the recess 41 of two transverse elements 32 abutting in the drive belt 3 mating, as a result of which a displacement with respect to one another in a direction oriented at right angles to the longitudinal direction of the drive belt 3 is limited to a tolerance of the protuberance 40 in the recess 41 in this direction.

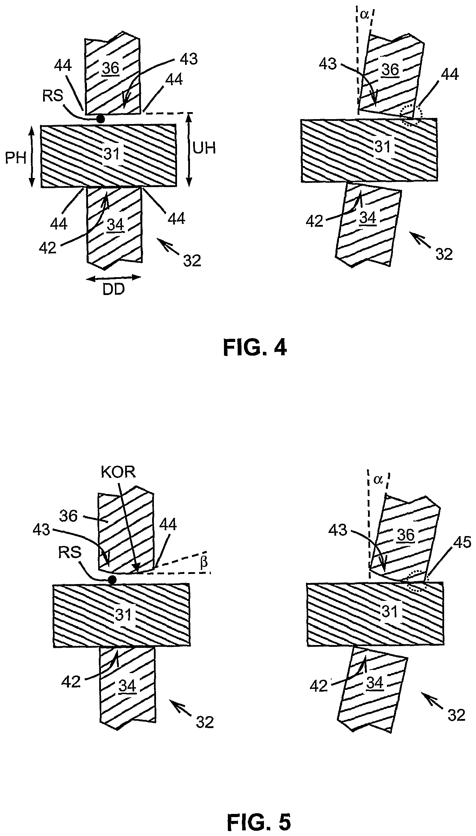

Figure 4 diagrammatically shows the transverse element 32 and the band set 31 in cross section in two different orientations with respect to one another. The left-hand side in Fig. 4 shows that a vertical distance between the web part 34 and the head part 36 at the location of the band set 31, i.e. the height UH of the cutout 33, is larger than the size of the band set 31 in this direction, i.e. the set height PH. In other words, the band set is accommodated with some radial, so-called channel tolerance GS, in the cutout. As a result, the transverse element 32 is able to rotate relative to the band set 31 about an axially oriented imaginary axis, as is illustrated on the right-hand side in Fig. 4. This relative rotation is ultimately limited when the band set 31 is in contact with both the saddle surface 42 and the top boundary surface 43 at the location of the respective edges 44 thereof. Of course, such a maximum rotation is determined by said cutout height UH, said set height PH and the -local-thickness DD of the transverse element 32 in the longitudinal direction of the drive belt 3.

As is also illustrated on the right-hand side of the figure 4, as a result of the rotation of the transverse element 32 relative to the band set 31, an undesirable contact occurs between a sharp edge 44 of the top boundary surface 43 where this joins, or as the case may be merges, with the front or rear side 39, 38 of the transverse element 32 and the top side of, that is to say the radially outermost band of, the band set 31. Such a contact is disadvantageous because it introduces a significant contact stress in the band set 31, as a result of which in particular the fatigue load thereof increases, which is to the detriment of the service life of the drive belt 3.

It should be noted here that said edges 44 will in reality be curved convexly as a result of the production process which is usually employed to produce the transverse element 32, but that the radius of curvature of the edge 44 which typically occurs in this case is only 0.3 to 0.5 mm.

Therefore, the present invention proposes to provide the top boundary surface 43 with a curvature in the longitudinal direction of the drive belt 3 in such a manner that no contact between the band set 31 and said edge 44 of the top boundary surface 43 can occur as a result thereof, which is illustrated in Fig. 5, also by means of two different orientations between the transverse element 32 and the band set 31 with respect to one another. The left-hand side of Fig. 5 in this case largely corresponds to that in Fig. 4, except for the top boundary surface 43 which is now designed as a circular arch with a single radius of curvature KOR. Said radius of curvature KOR is in this case chosen to be so small that at the maximum rotation with respect to one another, which is illustrated on the right-hand side in Fig. 5, the band set 31 comes into contact with the top boundary surface 43 at a point 45 which is situated at some distance from an edge 44 thereof.

Obviously, the curvature of the top boundary surface 43 affects said cutout height UH, which now at least increases effectively with an increasing rotation of the transverse element 32 and the band set 31 with respect to one another. This effect is preferably taken into account when calculating said maximum rotation with respect to one another and the resulting maximum permissible radius of curvature KOR for the top boundary surface 43.

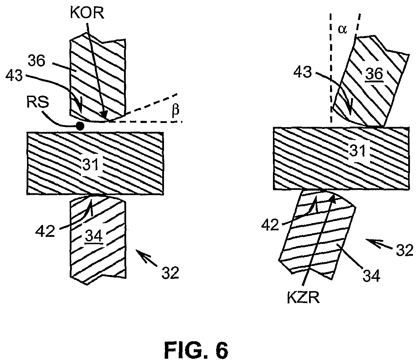

Finally, Fig. 6 illustrates, likewise by means of two different orientations of the transverse element 32 and the band set 31 with respect to one another, that an optional curvature of the saddle surface 42 also affects the degree of curvature required according to the invention for the top boundary surface 43. The left-hand side of Fig. 6 in this case largely corresponds to that of Fig. 5, except for the saddle surface 42 which is now designed as a circular arch with a single radius of curvature, the so-called short saddle radius KZR. The right-hand side of Fig. 6 shows that the curvature of the saddle surface 42 affects said cutout height UH, which consequently increases even more at an increasing rotation of the transverse element 32 and the band set 31 with respect to one another. This effect is preferably taken into account when calculating said maximum rotation with respect to one another and the resulting minimum curvature required for the top boundary surface 43, that is the maximum permissible radius of curvature KOR.

## Claims

1. Drive belt (3) provided with a band set (31) and a number of transverse elements (32), each transverse element (32) being provided with at least one cutout (33) having an inner surface (42, 43) for accommodating the band set (31), in such a manner that a first part (34) of the transverse element (32) extends below the band set (31) and a third part (36) of the transverse element (32) extends above the band set (31), in which drive belt (3) an amount of radial tolerance is provided between the transverse elements (32) and the band set (31) such that a transverse element (32) is able to rotate with respect to the band set (31) about an imaginary axis, oriented axially with respect to the band set (31), until it reaches a position wherein it is in contact with the band set (31) at the location of respective edges (44) of the inner surface (42, 43) of the cutout (33) located below and above the band set (31) and wherein it is oriented at an angle α from a radial position thereof with respect to the band set (31), and in which drive belt (3) a part (43) of the inner surface (42, 43), at the location of the third part (36) of the transverse element (32), is provided with a curvature oriented in the longitudinal direction with respect to the band set (31), **characterized in that** said part (43) of the inner surface (42, 43) is oriented at an angle β, at least near an edge (44) thereof, with respect to said longitudinal direction, which angle β is larger than said angle α.

2. Drive belt (3) according to Claim 1, **characterized in that** said part (43) of the inner surface (42, 43) is curved in the shape of a circular arch in accordance with a constant radius of curvature (KOR) of at most 20 mm.

## Patentansprüche

1. Antriebsriemen (3), der mit einem Bandsatz (31) und mit einer Anzahl von Querelementen (32) versehen ist, wobei jedes Querelement (32) mit mindestens einer Aussparung (33) mit einer Innenfläche (42, 43) zur derartigen Aufnahme des Bandsatzes (31), dass sich ein erster Teil (34) des Querelements (32) unterhalb des Bandsatzes (31) erstreckt und sich ein dritter Teil (36) des Querelements (32) oberhalb des Bandsatzes (31) erstreckt, versehen ist, wobei bei dem Antriebsriemen (3) ein Maß an Radialspiel zwischen den Querelementen (32) und dem Bandsatz (31) vorgesehen ist, so dass sich ein Querelement (32) bezüglich des Bandsatzes (31) um eine imaginäre Achse axial bezüglich des Bandsatzes (31) ausgerichtet drehen kann, bis es eine Stellung erreicht, in der es mit dem Bandsatz (31) an der Position jeweiliger Ränder (44) der Innenfläche (42, 43) der Aussparung (33), die unterhalb und oberhalb des Bandsatzes (31) positioniert sind, in Kontakt ist und in der es von einer radialen Stellung davon aus in einem Winkel α zu dem Bandsatz (31) ausgerichtet ist, und wobei bei dem Antriebsriemen (3) ein Teil (43) der Innenfläche (42, 43) an der Position des dritten Teils (36) des Querelements (32) mit einer Krümmung versehen ist, die in der Längsrichtung bezüglich des Bandsatzes (31) ausgerichtet ist, **dadurch gekennzeichnet, dass** der Teil (43) der Innenfläche (42, 43) in einem Winkel β, zumindest in der Nähe eines Rands (44) davon, zur Längsrichtung ausgerichtet ist, wobei der Winkel β größer als der Winkel α ist.

2. Antriebsriemen (3) nach Anspruch 1, **dadurch gekennzeichnet, dass** der Teil (43) der Innenfläche (42, 43) in Form eines Kreisbogens entsprechend einem konstanten Krümmungsradius (KOR) von höchstens 20 mm gekrümmt ist.

## Revendications

1. Courroie d'entraînement (3) pourvue d'un ensemble de bande (31) et d'une pluralité d'éléments transversaux (32), chaque élément transversal (32) étant pourvu d'au moins une découpe (33) ayant une surface interne (42, 43) pour recevoir l'ensemble de bande (31) de telle sorte qu'une première partie (34) de l'élément transversal (32) s'étende en dessous de l'ensemble de bande (31) et qu'une troisième partie (36) de l'élément transversal (32) s'étende au-dessus de l'ensemble de bande (31), dans laquelle courroie d'entraînement (3) un degré de tolérance radiale est prévu entre les éléments transversaux (32) et l'ensemble de bande (31) de telle sorte qu'un élément transversal (32) puisse tourner par rapport à l'ensemble de bande (31) autour d'un axe imaginaire, orienté axialement par rapport à l'ensemble de bande (31), jusqu'à ce qu'il atteigne une position dans laquelle il est en contact avec l'ensemble de bande (31) à l'emplacement de bords respectifs (44) de la surface interne (42, 43) de la découpe (33) situés en dessous et au-dessus de l'ensemble de bande (31) et dans laquelle il est orienté suivant un angle α à partir d'une position radiale de celui-ci par rapport à l'ensemble de bande (31), et dans laquelle courroie d'entraînement (3) une partie (43) de la surface interne (42, 43), à l'emplacement de la troisième partie (36) de l'élément transversal (32), est pourvue d'une courbure orientée dans la direction longitudinale par rapport à l'ensemble de bande (31), **caractérisée en ce que** ladite partie (43) de la surface interne (42, 43) est orientée suivant un angle β, au moins à proximité d'un bord (44) de celle-ci, par rapport à ladite direction longitudinale, lequel angle β est supérieur audit angle α.

2. Courroie d'entraînement (3) selon la revendication 1, **caractérisée en ce que** ladite partie (43) de la surface interne (42, 43) est courbée en forme d'arche circulaire suivant un rayon de courbure constant (KOR) de 20 mm au maximum.
